# EUROPEAN PATENT APPLICATION

(11) **EP 4 494 481 A1**
(43) Date of publication of application: **22.01.2025**
(21) Application number: 24176832.4
(22) Date of filing: 20.05.2024
(51) Int. Cl.: A23L 33/00, C12C 7/04, C12C 7/06, C12C 11/00, C12C 11/07, A23J 1/12, A23L 33/185

(54) **PROCESS AND SYSTEM FOR THE EXTRACTION OF ARABINO-XYLANES AND PROTEINS FROM BEER GRAINS AND THEIR USE IN LIQUID AND NON-LIQUID FOOD PRODUCTS**

(30) Priority: 06.07.2023 IT 202300014082
(71) Applicant: Birrificio Baladin S.S. Agricola, 12060 Piozzo (CN) (IT); B.Botanic S.r.l., 12060 Piozzo (CN) (IT)
(72) Inventor: Ferrario, Alessandro Mario, 12060 Piozzo (IT); Lamberti, Lorenzo, 12060 Piozzo (IT)
(74) Representative: Garavelli, Paolo

(57) **Abstract**

A process and a system for the extraction of arabino-xylans and proteins from beer grains and their use in liquid and non-liquid food products are described; the process includes the steps of: extraction of arabino-xylans (or proteins) from beer grains; filtration of the extract and separation of arabino-xylans (or proteins) from it; extraction of proteins (or arabino-xylans) from filtered beer grains; any means for conveying arabino-xylans and proteins within liquid food products, in particular drinks; any means for conveying arabino-xylans and proteins within non-liquid food products, in particular pastry or bakery products.

## Description

The present invention refers to a process and a plant for the extraction of arabino-xylans and proteins from beer grains and their use in liquid and non-liquid food products.

Beer grains (in English "Brewer's Spent Grain" - BSG) represent the main production waste in the beer production process, as approximately 35-40 kg of grains are produced for every 100 litres of drink.

The threshers are composed of the husk (*glumella*) which initially covers the barley grain, the pericarp and the seed coverings which remain after the mashing step.

Depending on the type of beer produced, in addition to barley malt, other cereals (malted or not) such as corn, rice, wheat, oats, rye or sorghum may be present.

The shelf life of grains is approximately 2-3 days in temperate climates, as they contain approximately 80% water and are an excellent substrate for microbial contamination and growth.

To be able to preserve the product, it is necessary to press or dry it so as to have a water content of less than 10%. The dry residue of the grains is composed of approximately 80% fibres (cellulose, hemicellulose and lignin) and 20% proteins (hordeins, glutelins, globulins and albumins). There are also vitamins, amino acids (in particular lysine), and phenolic compounds linked to the lignino-cellulose matrix.

The main current use of threshes is the delivery for animal feed or dispersion in the fields as fertilizer, this is due to the considerable costs for the transport and storage of the threshes for other uses: usually, breweries rely on agricultural companies present in the territory which go to recover the threshers free of charge.

Given the high nutritional value, threshes also represent a product that can be used for human consumption. In particular, after transformation into flour, they are used in various foods such as bread, biscuits and other snacks. The incorporation of threshed flour into baked products (at a rate of 20-30%) increases the content of fibre, proteins and amino acids, while decreasing the caloric intake.

Considering the growing interest in reusing waste products from agro-industrial processing from both an economic and environmental point of view, brewer's grains nowadays represent a reusable waste as an ingredient in food products, especially in bread, biscuits or other dairy products. oven thanks to the high fibre and protein content.

So far, however, no studies have addressed the extraction of arabino-xylans and proteins from beer grains for their use in various fields, for example within liquid food products, for example beverages such as beers from which these grains they could come from, or inside, non-liquid food products, such as pastry or bakery products.

Object of the present invention is therefore extracting xylans and proteins from arabino beer grains to use them in an efficient, innovative and immediate way in liquid food products, for example drinks such as the beers from which these grains could come, or within non-liquid food products, such as pastry or bakery products, in order to enrich these products with the properties of arabino-xylans and the proteins themselves.

The above and other objects and advantages of the invention, as will appear from the following description, are achieved with a process and a plant for the extraction of arabinoxylans and proteins from brewer's grains and their use in liquid and non-liquid food products such as those described in the respective independent claims. Preferred embodiments and non-trivial variants of the present invention form the subject matter of the dependent claims.

It is understood that all attached claims form an integral part of this description.

It will be immediately obvious that countless variations and modifications can be made to what is described (for example relating to shape, dimensions, arrangements and parts with equivalent functionality) without departing from the scope of the invention as appears from the attached claims.

The present invention will be better described by some preferred embodiments, provided by way of example and not by way of limitation.

According to a first embodiment, the process of the invention therefore serves for the extraction of arabino-xylans and proteins from beer grains and their use in liquid and non-liquid food products, and includes the steps of:
- extraction of arabino-xylans from beer grains
- filtration of the extract and separation of the arabino-xylans from it
- extraction of proteins from filtered beer grains
- possible conveyance of arabino-xylans and proteins within liquid food products, in particular beverages
- possible conveyance of arabino-xylans and proteins within non-liquid food products, in particular pastry or bakery products.

According to a second embodiment, the process of the invention therefore serves for the extraction of arabino-xylans and proteins from beer grains and their use in liquid and non-liquid food products, and includes the steps of:
- extraction of proteins from beer grains
- filtration of the extract and separation of proteins from it
- extraction of arabino-xylans from filtered beer grains
- possible conveyance of arabino-xylans and proteins within liquid food products, in particular beverages
- possible conveyance of arabino-xylans and proteins within non-liquid food products, in particular pastry or bakery products.

In particular, the extraction step of arabino-xylans from beer grains includes the following sub-steps.

The brewing process begins with the grinding of the cereals and the extraction of the sugars present in the starch of the cereals to produce the must, the medium on which the yeasts will carry out the fermentation, transforming the must into beer. At the end of this initial step, one has a liquid solution with a large number of solids in suspension: these are filtered generating the waste product to be used as a source of arabino-xylans. At the end of the filtration the grains have a humidity concentration of around 80% which makes them both difficult to transport and at risk of contamination. To reduce this problem, the grains are pressed on site to lower the humidity to around 50% and then transported and treated, preferably the same day. The stabilization of the grains consists in drying them until they reach humidity concentrations lower than 10%: at this point, the grains can also be stored for medium-long periods in a dry and thermo-stated environment. At the end of drying, the grains are subjected to enzymatic digestion. At the end of the enzymatic digestion, the arabino-xylans are resuspended in water and, to facilitate their use, they undergo the spray drying process, in order to transform them into an easy-to-use anhydrous powder. These purified and freeze-dried fibres will be added to a dough, for example to the classic "Albertengo panettone" dough, like a traditional flour.

Furthermore, in particular, the extraction step of proteins from brewer's grains includes the following sub-steps.

The protein extraction process begins with the rehydration of the grains. Subsequently, the system is heated and the enzymes responsible for the hydrolysis of arabino-xylans are introduced, which are thus transferred into the aqueous medium. At this point, the solids are separated from the liquids through a simple filtration, and the fibres hydrolysed by the enzymes are obtained in the liquid step, while, in the solid state, the residues of the threshers are obtained. Normally, the solid residue formed finds no further use and is treated as production waste without being valorised. However, the remaining biomass still has a good amount of protein that can be extracted. This operation is divided into a first step of protein release through ultrasound or enzymatic pretreatments capable of freeing the protein component trapped in the cell walls and in the cytosol. Subsequently, the denaturation of the proteins is induced by causing their precipitation through salting-out or by basifying the medium.

The present invention also relates to a plant (not illustrated) for the extraction of arabino-xylans and proteins from beer grains and their use in liquid or non-liquid food products.

According to a first preferred embodiment, this system includes:
- means for extracting arabino-xylans from brewer's grains
- means for filtering the extract and separating the arabino-xylans from it
- means for extracting proteins from filtered beer grains
- means for conveying arabino-xylans and proteins within liquid food products, in particular drinks
- means for conveying arabino-xylans and proteins within non-liquid food products, in particular pastry or bakery products.

According to a second preferred embodiment, this system comprises:
- means for extracting proteins from brewer's grains
- means for filtering the extract and separating the proteins from it
- means for extracting arabino-xylans from filtered beer grains
- means for conveying arabino-xylans and proteins within liquid food products, in particular drinks
- means for conveying arabino-xylans and proteins within non-liquid food products, in particular pastry or bakery products.

In particular, the means for extracting arabino-xylans from brewer's grains include:
- means for grinding cereals and extracting sugars present in the starch of the cereals to produce the must, the medium on which the yeasts will operate the fermentation transforming the must into beer, these means producing a liquid solution with a large number of solids in suspension;
- means for filtering suspended solids, generating a waste product to be used as a source of arabino-xylans, at the end of the filtration the grains present themselves with a humidity concentration of around 80% which makes them both difficult to transport and risk of contamination;
- means for pressing the threshers to lower the humidity to around 50%;
- means for treating the pressed grains through stabilization consisting of drying until humidity concentrations of less than 10% are reached, and means for storing the grains in a dry and thermo-stated environment;
- means for carrying out an enzymatic digestion of the grains, in which, at the end of the enzymatic digestion, the arabino-xylans are resuspended in water and to facilitate their use they undergo the spray drying process to transform them into an easy-to-use anhydrous powder;
- means for adding purified and freeze-dried thresh fibres to a dough such as traditional flour.

Again in particular, the means for extracting proteins from brewer's grains include:
- means for rehydrating the threshers;
- means for heating the grains and introducing the enzymes responsible for the hydrolysis of the arabino-xylans, which are thus transferred into the aqueous medium;
- means for separating solids from liquids through simple filtration and obtaining fibres hydrolysed by enzymes in the liquid step, while the residues of the threshers are obtained in the solid state;
- means for extracting proteins from the solid residue formed, including means for releasing proteins through ultrasound or enzymatic pretreatments capable of freeing the protein component trapped in the cell walls and in the cytosol, and means for inducing the denaturation of proteins causing their precipitation through salting-out or basifying the medium.

## Claims

1. Process for extracting arabino-xylans and proteins from beer grains and their use in liquid and non-liquid food products, the process including the steps of:
- extraction of arabino-xylans from beer grains
- filtration of the extract and separation of the arabino-xylans from it
- extraction of proteins from filtered beer grains
- possible conveyance of arabino-xylans and proteins within liquid food products, in particular beverages
- possible conveyance of arabino-xylans and proteins within non-liquid food products, in particular pastry or bakery products.

2. Process for the extraction of arabino-xylans and proteins from beer grains and their use in liquid and non-liquid food products, the process including the steps of:
- extraction of proteins from beer grains
- filtration of the extract and separation of proteins from it
- extraction of arabino-xylans from filtered beer grains
- possible conveyance of arabino-xylans and proteins within liquid food products, in particular beverages
- possible conveyance of arabino-xylans and proteins within non-liquid food products, in particular pastry or bakery products.

3. Process according to claim 1 or 2, wherein the step of extracting arabino-xylans from brewer's grains includes the sub-steps of:
- grinding of cereals and extraction of sugars present in the starch of the cereals to produce the must, the medium on which the yeasts will carry out the fermentation transforming the must into beer, this step producing a liquid solution with a large number of solids in suspension;
- filtration of suspended solids, generating a waste product to be used as a source of arabino-xylans, at the end of the filtration the grains present themselves with a humidity concentration of around 80% which makes them both difficult to transport and at risk of contamination;
- pressing of the grains to lower the humidity to around 50%;
- treatment of the pressed grains through stabilization consisting of drying until humidity concentrations of less than 10% are reached, and storage of the grains in a dry and thermo-stated environment;
- carrying out an enzymatic digestion of the grains, in which, at the end of the enzymatic digestion, the arabino-xylans are resuspended in water and to facilitate their use they undergo the spray drying process, in order to transform them in an easy-to-use anhydrous powder;
- addition of purified and freeze-dried grain fibres to a mixture such as traditional flour.

4. Process according to claim 1, 2 or 3, wherein the step of extracting proteins from brewer's grains includes the sub-steps of:
- rehydration of the grains;
- heating of the grains and introduction of the enzymes responsible for the hydrolysis of the arabino-xylans, which are thus transferred into the aqueous medium;
- separation of solids from liquids through simple filtration and obtaining the fibres hydrolysed by the enzymes in the liquid step, while the residues of the threshers are in the solid state;
- extraction of proteins from the solid residue formed, including a first step of protein release through ultrasound or enzymatic pretreatments capable of freeing the protein component trapped in the cell walls and in the cytosol, and a second step in which the denaturation of the proteins is induced causing their precipitation through salting-out or basifying the medium.

5. Plant for the extraction of arabino-xylans and/or proteins from beer grains and their use in liquid and non-liquid food products, the plant including:
- means for extracting arabino-xylans and/or proteins from brewer's grains
- means for filtering the extract and separating the arabino-xylans and/or proteins from it
- means for extracting arabino-xylans and/or proteins from filtered beer grains
- means for conveying arabino-xylans and/or proteins within liquid food products, in particular drinks
- means for conveying arabino-xylans and/or proteins within non-liquid food products, in particular pastry or bakery products.

6. Plant according to claim 5, wherein the means for extracting arabino-xylans from brewer's grains comprises:
- means for grinding cereals and extracting sugars present in the starch of the cereals to produce the must, the medium on which the yeasts will operate the fermentation transforming the must into beer, these means producing a liquid solution with a large number of solids in suspension;
- means for filtering suspended solids, generating a waste product to be used as a source of arabino-xylans, at the end of the filtration the grains present themselves with a humidity concentration of around 80% which makes them both difficult to transport and risk of contamination;
- means for pressing the threshers to lower the humidity to around 50%;
- means for treating the pressed grains through stabilization consisting of drying until humidity concentrations of less than 10% are reached, and storage of the grains in a dry and thermo-stated environment;
- means for carrying out an enzymatic digestion of the grains, in which, at the end of the enzymatic digestion, the arabino-xylans are resuspended in water and to facilitate their use they undergo the spray drying process, so to transform them into an easy-to-use anhydrous powder;
- means for adding purified and freeze-dried thresh fibres to a dough such as traditional flour.

7. System according to claim 5 or 6, wherein the means for extracting proteins from brewer's grains comprise:
- means for rehydrating the threshers;
- means for heating the grains and introducing the enzymes responsible for the hydrolysis of the arabino-xylans, which are thus transferred into the aqueous medium;
- means for separating solids from liquids through simple filtration and obtaining the fibres hydrolysed by the enzymes in the liquid step, while the residues of the threshers are in the solid state;
- means for extracting proteins from the solid residue formed, including means for releasing proteins through ultrasound or enzymatic pretreatments capable of freeing the protein component trapped in the cell walls and in the cytosol, and means for inducing the denaturation of proteins causing their precipitation through salting-out or basifying the medium.
